# EUROPÄISCHE PATENTSCHRIFT

(11) **EP 3 010 744 B1**
(45) Veröffentlichungstag und Bekanntmachung des Hinweises auf die Patenterteilung: **31.10.2018**
(21) Anmeldenummer: 14725663.0
(22) Anmeldetag: 12.05.2014
(51) Int. Cl.: B60K 6/365

(54) **HYBRIDANTRIEBSANORDNUNG**
HYBRID DRIVE ASSEMBLY
ENSEMBLE D'ENTRAÎNEMENT HYBRIDE

(30) Priorität: 17.06.2013 DE 102013211225
(43) Veröffentlichungstag der Anmeldung: 27.04.2016
(73) Patentinhaber: ZF Friedrichshafen AG, 88046 Friedrichshafen (DE)
(72) Erfinder: GERSTEN, Rayk, 88046 Friedrichshafen (DE); RECHENBACH, Philipp, 08539 Leubnitz (DE)
(86) Internationale Anmeldenummer: PCT/EP2014/059600
(87) Internationale Veröffentlichungsnummer: WO 2014/202280

(56) Entgegenhaltungen:
- WO-A1-2013/065677
- DE-A1- 19 915 926
- DE-A1-102008 000 953
- DE-A1-102011 082 185
- US-A1- 2003 064 846
- US-A1- 2011 319 215

## Beschreibung

Die Erfindung betrifft eine Hybridantriebsanordnung eines Kraftfahrzeuges nach dem Oberbegriff des Patentanspruches 1, wie aus der DE 199 15 926 A1 bekannt.

Durch die DE 10 2008 000 953 A1 der Anmelderin wurde eine Parallelhybridantriebsanordnung für ein Fahrzeug bekannt, wobei zwischen eine elektrische Maschine und ein Hauptgetriebe ein Planetengetriebe geschaltet ist. Das dreigliedrige Planetengetriebe, welches ein Sonnenrad, einen Steg oder Planetenträger und ein Hohlrad aufweist, dient primär als Drehzahlumkehreinrichtung zum Realisieren eines Rückwärtsganges, da das Hauptgetriebe keinen Rückwärtsgang umfasst. Bei dem getriebeeingangsseitig angeordneten Planetengetriebe wird der Steg bzw. der Planetenträger festgehalten; der Rotor der elektrischen Maschine ist mit dem Sonnenrad verbunden ist, und das abtreibende Hohlrad ist mit der Getriebeeingangswelle gekoppelt. Der Rotor treibt somit über eine Standübersetzung des Planetengetriebes die Getriebeeingangswelle an, wobei eine Drehrichtungsumkehr erfolgt.

Es ist Aufgabe der vorliegenden Erfindung, bei einer Hybridantriebsanordnung der eingangs genannten Art, eine weitere Verbesserung der Antriebsverhältnisse, insbesondere eine Anpassung der elektrischen Maschine an die Drehzahl der Getriebeeingangswelle zu erreichen.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass der Steg des Planetengetriebes mit der Getriebeeingangswelle gekoppelt ist und das Hohlrad festgehalten wird. Damit ist zwischen dem Rotor der elektrischen Maschine und der Getriebeeingangswelle eine Standübersetzung des Planetengetriebes wirksam. Wenn die elektrische Maschine im Motorbetrieb arbeitet, wird die Drehzahl des Rotors durch die Standübersetzung ins Langsame übersetzt; im Schubbetrieb, wenn die elektrische Maschine als Generator arbeitet, wird die Drehzahl der Getriebeeingangswelle durch die Standübersetzung ins Schnelle übersetzt. Eine Drehrichtungsumkehr erfolgt durch die Standübersetzung nicht.

Erfindungsgemäß ist der Rotor auf einem Rotorträger angeordnet, welcher sich über ein Festlager im Gehäuse abstützt. Damit ist der Rotor gegenüber dem Gehäuse in radialer und axialer Richtung fixiert.

Nach einer weiteren bevorzugten Ausführungsform weist der Steg des Planetengetriebes einen zylindrischen Hals auf, der dreh- und kippfest mit der Getriebeeingangswelle verbunden ist. Vorzugsweise ist der Hals über eine als Festsitz ausgebildete Mitnahmeverzahnung drehfest mit der Getriebeeingangswelle verbunden und über einen Zentriersitz gegen eine Verkippung gesichert. Der Steg ist somit quasi starr mit der Getriebeeingangswelle verbunden.

Nach einer weiteren bevorzugten Ausführungsform ist der Steg - über die Getriebeeingangswelle - statisch bestimmt gelagert, und zwar über ein erstes als Festlager ausgebildetes Lager, welches vorzugsweise im Gehäuse des Hauptgetriebes angeordnet ist, und über ein zweites als Loslager ausgebildetes Lager, ein so genanntes Pilotlager, im Bereich der Verbrennungskraftmaschine.

Erfindungsgemäß weist der Steg einen Bolzenträger auf, der am Rotorträger abgestützt ist, wobei sich der Bolzenträger vorzugsweise über ein Nadellager gegenüber dem Rotorträger abstützt. Der Rotorträger ist somit zweifach gelagert, nämlich einerseits über das erwähnte Festlager und andererseits über das Nadellager.

Nach einer weiteren bevorzugten Ausführungsform ist der Rotorträger über eine Mitnahmeverzahnung mit dem Sonnenrad verbunden, wobei die Innenverzahnung des Rotorträgers und die Außenverzahnung des Sonnenrades axial gegeneinander verschiebbar sind. Damit ist eine Montage des Rotorträgers durch Einschieben in axialer Richtung möglich.

Nach einer weiteren bevorzugten Ausführungsform weist das Sonnenrad einen zylindrischen Hals auf, an dessen Ende die Mitnahmeverzahnung angeordnet ist und das Drehmoment übertragen wird.

Nach einer weiteren bevorzugten Ausführungsform erstreckt sich der Hals des Sonnenrades radial innerhalb der Nabe des Rotorträgers. Damit wird der Vorteil einer Raum sparenden Bauweise erreicht: Das Planetengetriebe kann somit "bauraumneutral", d.h. ohne zusätzlichen Aufwand an Bauraum innerhalb des Rotors untergebracht werden.

Nach einer weiteren bevorzugten Ausführungsform ist das Sonnenrad in den Rotorträger integriert, d.h. das Sonnenrad bildet eine bauliche Einheit mit dem Rotorträger, vorzugsweise mit der Nabe des Rotorträgers. Aufgrund dieser Variante entfällt das oben erwähnte Nadellager zwischen Bolzenträger und Rotornabe sowie der Hals des Sonnenrades mit Mitnahmeverzahnung.

Nach einer weiteren bevorzugten Ausführungsform weisen die Zahnräder des Planetengetriebes eine Schrägverzahnung auf. Damit ergibt sich ein geräuscharmer und ruhiger Lauf.

Nach einer weiteren bevorzugten Ausführungsform ist die Ölversorgung des Planetengetriebes und der elektrischen Maschine an die Ölversorgung des Hauptgetriebes angeschlossen. Hierzu sind eine Ölübergabe sowie Längs- und Querbohrungen in der Getriebeeingangswelle vorgesehen, über welche das Schmier- und Kühlöl zu- und abgeführt wird.

Nach einer weiteren bevorzugten Ausführungsform erfolgt der Rücklauf des Öls aus dem Ölraum des Hybridgehäuses in den Ölraum des Hauptgetriebes über ein Ölrücklaufrohr, welches zwischen beiden Getriebegehäusen angeordnet ist. Damit ist die Schmierung und Kühlung des Planetengetriebes, der Lager und der elektrischen Maschine sichergestellt.

Nach einer weiteren bevorzugten Ausführungsform ist das Hohlrad über einen Hohlradträger mit dem Hybridgehäuse verbunden. Bevorzugt greift der Hohlradträger mit einer Außenverzahnung in die Innenverzahnung des Hohlrades ein.

Nach einer weiteren bevorzugten Ausführungsform ist die elektrische Maschine als permanent erregte Synchronmaschine ausgebildet. Die permanent erregte Synchronmaschine ist aus Gründen der Leistungsdichte für eine relativ hohe Drehzahl ausgelegt, welche durch die Standübersetzung des Planetengetriebes an die niedrigere Drehzahl der Getriebeeingangswelle angepasst wird. Hieraus ergibt sich der Vorteil, dass für den Hybridantrieb eine elektrische Maschine mit relativ niedrigem Gewicht, kleinem Bauvolumen und relativ geringen Kosten verwendet werden kann.

Ausführungsbeispiele der Erfindung sind in der Zeichnung dargestellt und werden im folgenden näher beschrieben, wobei sich aus der Beschreibung und/oder der Zeichnung weitere Merkmale und/oder Vorteile ergeben können. Es zeigen:
- Fig. 1: eine schematische Darstellung der erfindungsgemäßen Hybridantriebsanordnung,
- Fig. 2: eine konstruktive Ausführungsform der erfindungsgemäßen Hybridantriebsanordnung,
- Fig. 3: eine schematische Darstellung einer Lageranordnung für die Hybridantriebsanordnung,
- Fig. 4: eine Darstellung der Ölströme für die Schmierölversorgung der Hybridantriebsanordnung,
- Fig. 5: eine konstruktive Einzelheit für eine Ölrückführung und
- Fig. 6: eine zweite Ausführungsform für die Hybridantriebsanordnung.

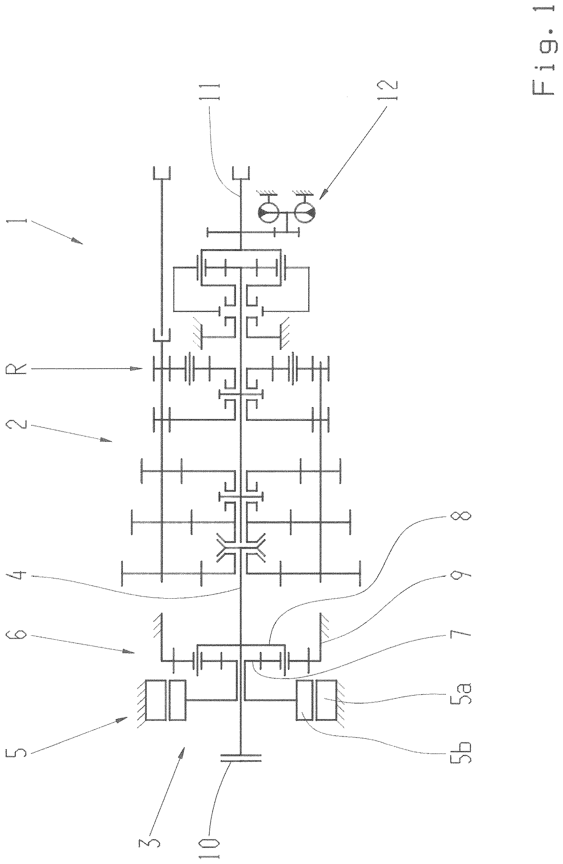

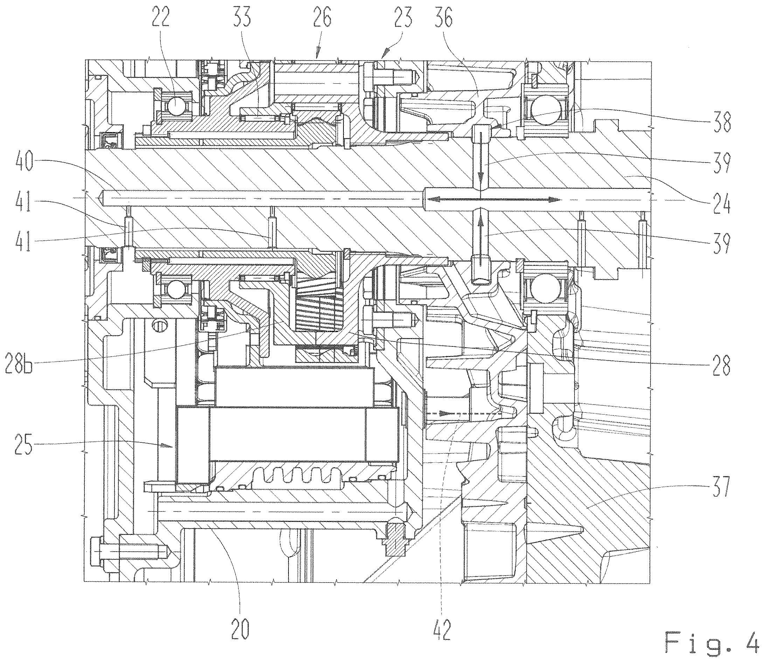

Fig. 1 zeigt in schematischer Darstellung eine Hybridantriebsanordnung 1, welche ein Hauptgetriebe 2 und eine Hybridmodul 3 umfasst. Das Hauptgetriebe 2 weist eine Getriebeeingangswelle 4, mehrere Gangstufen (ohne Bezugszahl) für Vorwärtsgänge sowie eine Gangstufe für einen Rückwärtsgang R auf. Das Hybridmodul 3 umfasst eine elektrische Maschine 5 mit einem Stator 5a und einem Rotor 5b sowie ein Planetengetriebe 6, welches einerseits mit dem Rotor 5b und andererseits mit der Getriebeeingangswelle 4 verbunden ist. Das Planetengetriebe 6 umfasst drei Glieder, nämlich ein Sonnenrad 7, einen Steg oder Planetenträger 8 sowie ein Hohlrad 9, welches am Gehäuse abgestützt ist. Zwischen Rotor 5b und Getriebeeingangswelle 4 ist somit eine Standübersetzung des Planetengetriebes 6 wirksam. Die Getriebeeingangswelle 4 ist über eine Kupplung 10 mit einem nicht dargestellten Verbrennungsmotor eines Kraftfahrzeuges verbunden. Die Hybridantriebsanordnung 1 entspricht also einem Parallelhybrid. Das Hauptgetriebe 2 weist ferner eine Getriebeausgangswelle 11 auf, welche eine Ölpumpe 12 antreibt, welche sowohl das Hauptgetriebe 2 als auch das Hybridmodul 5 mit Öl versorgt, wie bei der Beschreibung von Fig. 4 näher erläutert wird. Die elektrische Maschine 5 ist nach einer bevorzugten Ausführungsform als handelsübliche permanent erregte Synchronmaschine ausgebildet und sowohl als Motor als auch als Generator betreibbar. Die permanent erregte Synchronmaschine (PSM) ist bevorzugt für eine relativ hohe Drehzahl ausgelegt, um die Leistungsdichte zu erhöhen und den Materialeinsatz von teuren Werkstoffen zu reduzieren. Das Planetengetriebe 6 wirkt somit zwischen der höheren Drehzahl des Rotors 5b und der niedrigeren Drehzahl der Getriebeeingangswelle 4 als Untersetzungsstufe. Das Planetengetriebe 6, d.h. das Sonnenrad 7, die Planetenräder und das Hohlrad 9 weisen eine Schrägverzahnung auf.

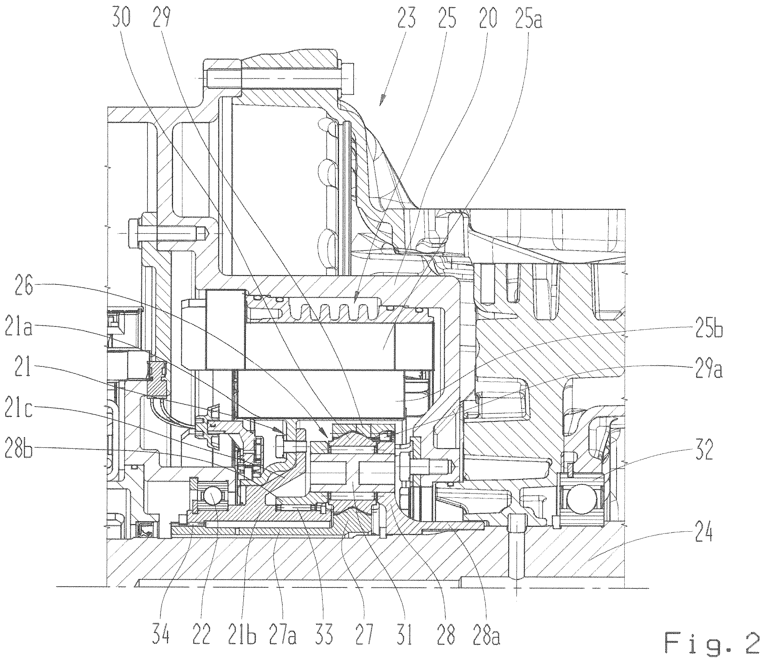

Fig. 2 zeigt eine konstruktive Ausführungsform eines Hybridmoduls 23, wie es in Fig. 1 schematisch als Hybridmodul 3 dargestellt ist. Im Folgenden werden analoge Teile mit einer um 20 erhöhten Bezugsziffer gegenüber Fig. 1 bezeichnet. Eine elektrische Maschine 25, welche einen Stator 25a und einen Rotor 25b aufweist, ist in einem Hybridgehäuse 20 angeordnet. Der Rotor 25b weist einen Rotorträger 21 auf, welcher über ein als Wälzlager 22 ausgebildetes Festlager gegenüber dem Hybridgehäuse 20 gelagert ist. Der Rotorträger 21 umfasst eine radial außen angeordnete Trommel 21a, eine radial innen angeordnete Nabe 21b, sowie eine die Trommel 21a und die Nabe 21b verbindende Tragscheibe 21c auf. Radial innerhalb der Trommel 21a und in der Zeichnung rechts von der Tragscheibe 21c ist ein Planetengetriebe 26 angeordnet, welches - analog der schematischen Darstellung in Fig. 1 - ein Sonnenrad 27, einen Steg 28, ein Hohlrad 29 sowie Planetenräder 30 umfasst. Der Steg 28, auch Planetenträger 28 genannt, weist einen Hals 28a auf, welcher dreh- und kippfest sowie axial fixiert auf einer Getriebeeingangswelle 24 angeordnet ist, was einerseits durch eine Mitnahmeverzahnung als Festsitz und andererseits durch einen Zentriersitz erfolgt. Auf der dem Steg 28 abgewandten Seite ist ein Bolzenträger 28b angeordnet, welcher fest mit dem Steg 28 verbunden ist (siehe hierzu auch Fig. 4). Der Steg 28 und der Bolzenträger 28b nehmen Planetenbolzen 31 zur Lagerung der Planetenräder 30 auf. Das Hohlrad 29 ist über einen Hohlradträger 29a, welcher mit einer Außenverzahnung in die Innenverzahnung des Hohlrades 29 eingreift, mit dem Hybridgehäuse 20 verbunden, d. h. das Hohlrad 29 ist gehäusefest angeordnet. Die Getriebeeingangswelle 24 ist gehäuseseitig über ein Festlager 32 abgestützt. Der Bolzenträger 28b ist über ein Nadellager 33, d. h. ein Loslager gegenüber der Nabe 21b des Rotorträgers 21 abgestützt. Das Sonnenrad 27 weist einen koaxial und mit einem Ringspalt gegenüber der Getriebeeingangswelle 24 angeordneten Hals 27a auf, welcher im Bereich des Festlagers 22 über eine axial verschiebbare Mitnahmeverzahnung 34 mit dem Rotorträger 21 bzw. dessen Nabe 21b verbunden ist.

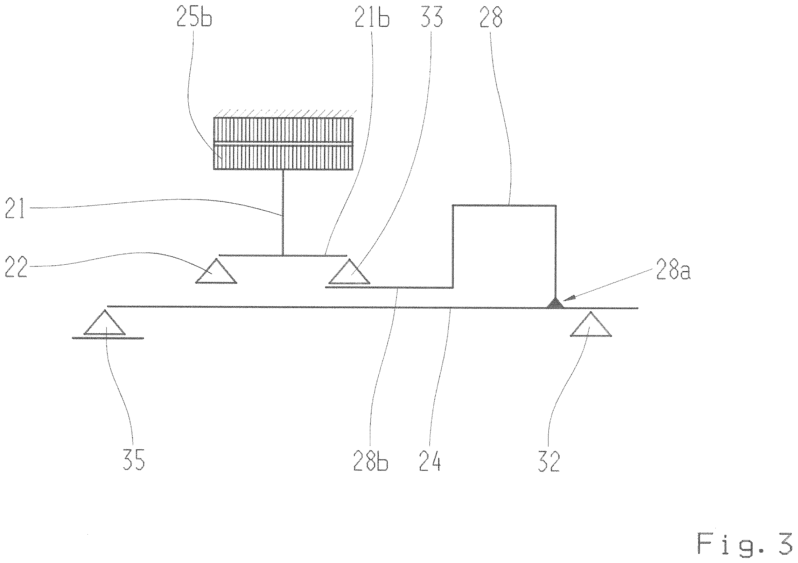

Fig. 3 zeigt eine schematische Darstellung des Lagerkonzepts des Hybridmoduls 23, wie es in Fig. 2 dargestellt ist. Im Folgenden werden für gleiche oder analoge Teile dieselben Bezugsziffern wie in Fig. 2 verwendet. Der Rotor 25b ist durch den Rotorträger 21 und dessen Nabe 21b über das Festlager 22 und das als Loslager ausgebildete Nadellager 33 abgestützt. Der Steg 28 ist an der Stelle 28a (entspricht dem Hals 28a) drehfest und kippfest an der Getriebeeingangswelle 24 befestigt. Letztere ist über das gehäusefeste Festlager 32 und ein als Loslager ausgebildetes Pilotlager 35 im Bereich des nicht dargestellten Verbrennungsmotors gelagert.

Fig. 4 zeigt einen weiteren Ausschnitt des Hybridmoduls 23 - für gleiche Teile werden gleiche Bezugszahlen wie in Fig. 2 verwendet. Das Hybridmodul 23 umfasst ein Hybridgehäuse 20, in welchem im Wesentlichen die elektrische Maschine 25, das Planetengetriebe 26 sowie die Lager 22, 33 angeordnet sind. Das Hybridgehäuse 20 ist über eine Anschlussplatte 36 mit dem Getriebegehäuse 37 des Hauptgetriebes 2 verbunden. Das Hybridmodul 23 ist im Hinblick auf seine Ölversorgung an den Ölkreislauf des Hauptgetriebes 2 angeschlossen, welches - wie in Fig. 1 gezeigt - über eine eigene Ölpumpe 12 verfügt. Das Schmier- und Kühlöl, im Folgenden kurz Öl genannt, wird an einer Übergabestelle 38 in der Anschlussplatte 36 an das Hybridmodul 23 übergeben und gelangt von dort über Querkanäle 39 in der Getriebeeingangswelle 24 in einen Längskanal 40. Vom Längskanal 40 in der Getriebeeingangswelle 24 strömt das Öl über zwei weitere Querkanäle 41 nach außen und versorgt über zwei unterschiedliche Ölpfade die Schmier- und Kühlstellen des Hybridmoduls 23. Der Rücklauf des Öls in das Hauptgetriebe 2 erfolgt über einen gestrichelt angedeuteten Rücklauf 42.

In Fig. 4, untere Bildhälfte ist auch - wie oben angedeutet - zu erkennen, dass der Steg 28 und der Bolzenträger 28b mechanisch miteinander verbunden sind und ein bauliche Einheit bilden.

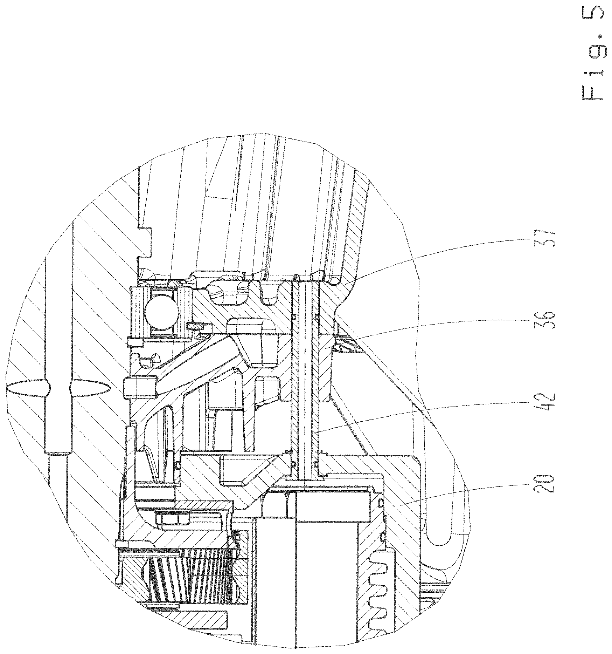

Fig. 5 zeigt den Ölrücklauf 42, ausgebildet als Rücklaufrohr 42, welches durch die Anschlussplatte 36 hindurchgeführt ist und eine Strömungsverbindung zwischen dem Ölraum des Hybridgehäuses 20 und dem Ölraum des Getriebegehäuses 37 herstellt.

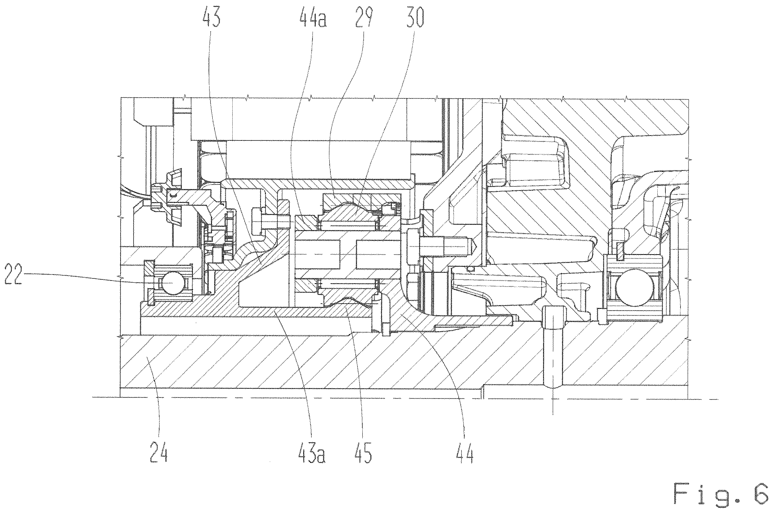

Fig. 6 zeigt ein zweites Ausführungsbeispiel der Erfindung mit einem modifizierten Rotorträger 43 und einem modifizierten Steg 44. Das zweite Ausführungsbeispiel unterscheidet sich von dem ersten Ausführungsbeispiel gemäß Fig. 2 dadurch, dass ein Nadellager 33 oder eine Abstützung zwischen Steg und Rotorträger nicht vorgesehen ist. Statt dessen weist der Rotorträger 43, welcher gehäuseseitig über das Festlager 22 abgestützt ist, einen zylindrischen, koaxial zur Getriebeeingangswelle 24 angeordneten Hals 43a auf, an welchem endseitig ein Sonnenrad 45 fest angeordnet ist. Das Sonnenrad 45 ist somit in den Rotorträger 43 bzw. dessen Hals 43a integriert und bildet mit diesem eine bauliche Einheit. Das Sonnenrad 45, welches eine Schrägverzahnung aufweist, greift in das Planetenrad 30 ein, welches in Eingriff mit dem festgehaltenen Hohlrad 29 steht. Der Bolzenträger 44a, welcher fest mit dem Steg 44 verbunden ist, ist gegenüber der Ausführungsform gemäß Fig. 2 insofern modifiziert, als er keine Laufbahn für ein Lager aufweist. Der Bolzenträger 44a stützt sich somit nicht auf dem Rotorträger 43, sondern ausschließlich am Steg 44 ab, der - wie im Ausführungsbeispiel gemäß Fig. 2 - dreh- und kippfest mit der Getriebeeingangswelle 24 verbunden ist.

### Bezugszeichen

- 1: Hybridantriebsanordnung
- 2: Hauptgetriebe
- 3: Hybridmodul
- 4: Getriebeeingangswelle
- 5: Elektrische Maschine
- 5a: Stator
- 5b: Rotor
- 6: Planetengetriebe
- 7: Sonnenrad
- 8: Steg (Planetenträger)
- 9: Hohlrad
- 10: Kupplung
- 11: Getriebeausgangswelle
- 12: Ölpumpe

- 20: Hybridgehäuse
- 21: Rotorträger
- 21a: Trommel
- 21b: Nabe
- 21c: Tragscheibe
- 22: Festlager
- 23: Hybridmodul
- 24: Getriebeeingangswelle
- 25: Elektrische Maschine
- 25a: Stator
- 25b: Rotor
- 26: Planetengetriebe
- 27: Sonnenrad
- 27a: Hals
- 28: Steg
- 28a: Hals
- 28b: Bolzenträger
- 29: Hohlrad
- 29a: Hohlradträger
- 30: Planetenrad
- 31: Planetenbolzen
- 32: Festlager
- 33: Nadellager
- 34: Mitnahmeverzahnung
- 35: Pilotlager (Loslager)
- 36: Anschlussplatte
- 37: Getriebegehäuse
- 38: Ölübergabestelle
- 39: Querkanal
- 40: Längskanal
- 41: Querkanal
- 42: Ölrücklauf
- 43: Rotorträger
- 43a: Hals
- 44: Steg
- 44a: Bolzenträger
- 45: Sonnenrad

- R: Rückwärtsgang

## Patentansprüche

1. Hybridantriebsanordnung eines Kraftfahrzeuges, umfassend ein Hauptgetriebe (2) mit einer Getriebeeingangswelle (4, 24) und einem Getriebegehäuse (37), eine als Motor und Generator betreibbare, einen Rotor (5b, 25b) aufweisende elektrische Maschine (5, 25), welche eingangsseitig zum Hauptgetriebe (2) angeordnet ist, ein Planetengetriebe (6, 26), welches ein Sonnenrad (7, 27, 45), einen Steg (8, 28, 44) und ein Hohlrad (9, 29) aufweist, wobei das Planetengetriebe (6, 26) einerseits über das Sonnenrad (7, 27, 45) mit dem Rotor (5b, 25b) und andererseits mit der Getriebeeingangswelle (4, 24) verbunden ist, der Steg (8, 28, 44) drehfest mit der Getriebeeingangswelle (4, 24) verbunden ist und das Hohlrad (9, 29) gehäusefest angeordnet ist, **dadurch gekennzeichnet, dass** der Rotor (25b) mit einem Rotorträger (21, 43) verbunden ist, welcher über ein als Festlager (22) ausgebildetes Lager gehäuseseitig abgestützt ist und der Steg (28) einen Bolzenträger (28b) aufweist, der am Rotorträger (21, 21b) abgestützt ist.

2. Hybridantriebsanordnung nach Anspruch 1, **dadurch gekennzeichnet, dass** der Steg (28) einen zylindrisch ausgebildeten Hals (28a) aufweist, welcher dreh- und kippfest mit der Getriebeeingangswelle (24) verbunden ist.

3. Hybridantriebsanordnung nach Anspruch 1 oder 2, **dadurch gekennzeichnet, dass** der Steg (28, 44) über ein erstes Lager (32) und ein zweites Lager (35) statisch bestimmt gelagert ist.

4. Hybridantriebsanordnung nach einem der Ansprüche 1 bis 3, **dadurch gekennzeichnet, dass** der Rotorträger (21) über eine axial verschiebbare Mitnahmeverzahnung (34) mit dem Sonnenrad (27) verbunden ist.

5. Hybridantriebsanordnung nach Anspruch 4, **dadurch gekennzeichnet, dass** das Sonnenrad (27) einen zylindrischen Hals (27a) aufweist und die Mitnahmeverzahnung (34) am dem Sonnenrad (27) abgewandten Ende des Halses (27a) angeordnet ist.

6. Hybridantriebsanordnung nach Anspruch 5, **dadurch gekennzeichnet, dass** der Rotorträger (21) eine Nabe (21b) aufweist und der Hals (27a) des Sonnenrades (27) radial innerhalb der Nabe (21b) angeordnet ist.

7. Hybridantriebsanordnung nach einem der Ansprüche 1 bis 3, **dadurch gekennzeichnet, dass** das Sonnenrad (45) in den Rotorträger (43) integriert und auf der dem Festlager (22) abgewandten Seite des Rotorträgers (43) angeordnet ist.

8. Hybridantriebsanordnung nach einem der Ansprüche 1 bis 7, **dadurch gekennzeichnet, dass** das Planetengetriebe (26) eine Schrägverzahnung aufweist.

## Claims

1. Hybrid drive arrangement of a motor vehicle, comprising a main transmission (2) with a transmission input shaft (4, 24) and a transmission housing (37), further comprising an electric machine (5, 25) which can be operated as a motor and a generator, has a rotor (5b, 25b), and is arranged on the input side with respect to the main transmission (2), further comprising a planetary transmission (6, 26) which has a sun gear (7, 27, 45), a spider (8, 28, 44) and an internal gear (9, 29), the planetary transmission (6, 26) being connected on one side via the sun gear (7, 27, 45) to the rotor (5b, 25b) and on the other side to the transmission input shaft (4, 24), the spider (8, 28, 44) being connected fixedly to the transmission input shaft (4, 24) so as to rotate with it, and the internal gear (9, 29) being arranged fixedly on the housing, **characterized in that** the rotor (25b) is connected to a rotor carrier (21, 43) which is supported on the housing side via a bearing which is configured as a locating bearing (22), and the spider (28) has a pin carrier (28b) which is supported on the rotor carrier (21, 21b).

2. Hybrid drive arrangement according to Claim 1, **characterized in that** the spider (28) has a neck (28a) of cylindrical configuration which is connected fixedly in terms of rotation and tilting to the transmission input shaft (24).

3. Hybrid drive arrangement according to Claim 1 or 2, **characterized in that** the spider (28, 44) is mounted in a statically determined manner via a first bearing (32) and a second bearing (35).

4. Hybrid drive arrangement according to one of Claims 1 to 3, **characterized in that** the rotor carrier (21) is connected to the sun gear (27) via an axially displaceable driving spline system (34).

5. Hybrid drive arrangement according to Claim 4, **characterized in that** the sun gear (27) has a cylindrical neck (27a), and the driving spline system (34) is arranged at that end of the neck (27a) which faces away from the sun gear (27).

6. Hybrid drive arrangement according to Claim 5, **characterized in that** the rotor carrier (21) has a hub (21b), and the neck (27a) of the sun gear (27) is arranged radially within the hub (21b).

7. Hybrid drive arrangement according to one of Claims 1 to 3, **characterized in that** the sun gear (45) is integrated into the rotor carrier (43) and is arranged on that side of the rotor carrier (43) which faces away from the locating bearing (22).

8. Hybrid drive arrangement according to one of Claims 1 to 7, **characterized in that** the planetary transmission (26) has a helical toothing system.

## Revendications

1. Ensemble d'entraînement hybride pour véhicule automobile, l'ensemble comprenant
une transmission principale (2) présentant un arbre (4, 24) d'entrée de transmission et un carter (37) de transmission,
une machine électrique (5, 25) pouvant fonctionner en moteur ou en génératrice, présentant un rotor (5b, 25b) et disposée du côté de l'entrée de la transmission principale (2),
une transmission (6, 26) à planétaires qui présente une roue solaire (7, 27, 45), une liaison (8, 28, 44) et une roue creuse (9, 29), la transmission (6, 26) à planétaires étant reliée d'une part au rotor (5b, 25b) par l'intermédiaire de la roue solaire (7, 27, 45) et d'autre part à l'arbre (4, 24) d'entrée de transmission, la liaison (8, 28, 44) étant reliée à rotation solidaire à l'arbre (4, 24) d'entrée de transmission et la roue creuse (9, 29) étant fixe par rapport au carter,
**caractérisé en ce que**
le rotor (25b) est relié à un support (21, 43) de rotor soutenu côté carter par un palier configuré comme palier fixe (22), la liaison (28) présentant un support (28b) de goujon soutenu sur le support (21, 21b) de rotor.

2. Ensemble d'entraînement hybride selon la revendication 1, **caractérisé en ce que** la liaison (28) présente un col cylindrique (28a) relié à rotation solidaire et à basculement conjoint à l'arbre (24) d'entrée de transmission.

3. Ensemble d'entraînement hybride selon les revendications 1 ou 2, **caractérisé en ce que** la liaison (28, 44) est montée de manière statiquement définie par l'intermédiaire d'un premier palier (32) et d'un deuxième palier (35).

4. Ensemble d'entraînement hybride selon l'une des revendications 1 à 3, **caractérisé en ce que** le support (21) de rotor est relié à la roue solaire (27) par l'intermédiaire d'une denture d'entraînement (34) apte à coulisser axialement.

5. Ensemble d'entraînement hybride selon la revendication 4, **caractérisé en ce que** la roue solaire (27) présente un col cylindrique (27a) et la denture d'entraînement (34) est disposée à l'extrémité du collet (27a) non tournée vers la roue solaire (27).

6. Ensemble d'entraînement hybride selon la revendication 5, **caractérisé en ce que** le support (21) de rotor présente un bec (21b) et le collet (27a) de la roue solaire (27) est disposé radialement à l'intérieur du bec (21b).

7. Ensemble d'entraînement hybride selon l'une des revendications 1 à 3, **caractérisé en ce que** la roue solaire (45) est intégrée dans le support (43) de rotor et est disposée sur le côté du support (43) de rotor non tourné vers le palier fixe (22).

8. Ensemble d'entraînement hybride selon l'une des revendications 1 à 7, **caractérisé en ce que** la transmission (26) à planétaires présente une denture oblique.
